# EUROPÄISCHE PATENTSCHRIFT

(11) **EP 1 300 234 B1**
(45) Veröffentlichungstag und Bekanntmachung des Hinweises auf die Patenterteilung: **06.10.2004**
(21) Anmeldenummer: 02019270.4
(22) Anmeldetag: 28.08.2002
(51) Int. Cl.: B29C 51/26, B29C 51/04

(54) **Verfahren zum Betreiben einer Thermoformmaschine mit einer Vorstrecker-Antriebseinrichtung**
Method for operating a thermoforming machine having a drive assembly for pre-strecher device
Procédé d'utilisation d'une machine de thermoformage équipé d'un dispositif d'entraînement pour pré-étirage

(30) Priorität: 02.10.2001 DE 10148648
(43) Veröffentlichungstag der Anmeldung: 09.04.2003
(73) Patentinhaber: Gabler Thermoform GmbH & Co. KG, 23568 Lübeck (DE)
(72) Erfinder: Schröder, Jens, 23564 Lübeck (DE)
(74) Vertreter: Valentin, Ekkehard

(56) Entgegenhaltungen:
- WO-A-01/34368
- DE-A- 2 531 236
- DE-A- 19 815 189
- US-A- 3 105 270
- US-A- 4 702 688

## Beschreibung

Die Erfindung betrifft ein Verfahren zum Betreiben einer Vorrichtung zum Ausstanzen bzw. zum kombinierten Formen und Ausstanzen von Formteilen, die aus einer im intermittierenden Transport in das Werkzeug zugeführten, erwärmten thermoplastischen Kunststoffolie mittels Druckluft unter Zuhilfenahme von in die Kunststoffolie pro Formnest eintauchenden Vorstreckern tiefgezogen werden, wobei eine elektromagnetische Vorstrecker-Antriebseinrichtung einen Servomotor umfaßt, der integriert einen Drehgeber oder Resolver sowie eine Betriebsbremse aufweist und über eine angetriebene Spindel ein mit den Vorstreckem ausgerüstetes, geführtes Tragmittel verstellt.

Eine derartige Thermoformmaschine mit einer Stanzstation bzw. kombinierter Form-/Stanzstation, bei der die Verformung des Formteiles mittels Druckluft unter Zuhilfenahme von elektromotorisch angetriebenen Vorstreckem bzw. Streckhelfern erfolgt, ist z.B. durch die DE 198 15 189 A1 bekanntgeworden. Der motorische statt alternativ hydraulische oder pneumatische Antrieb der Vorstrecker, vorzugsweise mittels Servomotor über Kugelrollspindel oder Planetenrollenantrieb, ermöglicht es, daß sich beliebige Bewegungsabläufe und Endlagen rasch definieren und verändern lassen. In dem in der Form- und/oder Stanzstation der Thermoformmaschine vorgesehenen Form-/Stanzwerkzeug werden die herzustellenden, tiefgezogenen Formteile durch Differenzdruck geformt und aus der Folienbahn ausgestanzt. Der Tiefziehprozeß wird hierbei durch eine mechanische Vorstreckung der Formteile in Form von Vorstreckern unterstützt, die pro Formnest vorgesehen und über Stangen mit einer Platte verbunden sind. An diese Platte greift ein Servomotor mit Drehgeber an und treibt über eine Kugelrollspindel und eine entsprechende Mutter einen geführten Schlitten linear an. Dieser ist über eine Kupplung mit einer Stange verbunden, die in Wirkverbindung mit der die Vorstrecker tragenden Platte steht.

Aufgrund der Verformung der Formteile mittels Druckluft und des sich in dem Form- und/oder Stanzwerkzeug einstellenden Differenzdruckes treten aus dem Werkzeug heraus sich in Richtung auf die Vorstrecker-Antriebseinrichtung bzw. den Servomotor auswirkende Kräfte auf, die insbesondere bei einer Betriebsweise der Thermoformmaschine mit hohen Taktzeiten pro Minute und entsprechender Druckluftzufuhr so groß sind, daß sie die Antriebseinheit in ihrer Arbeitsposition verschieben können. Zwar besitzen die Servomotoren eine Betriebsbremse, die im gewissen Umfang Haltemomente aufbringen bzw. -nehmen kann, um die angetriebenen Massen zu halten, jedoch bei aus dem Verfahrensprozeß innerhalb der Formwerkzeuge und Kombi-Stanzwerkzeuge auftretenden höheren externen Kräften nicht mehr in der Lage ist, diese Kräfte zu kompensieren. Die dadurch verursachten Lageveränderungen der notwendigerweise exakt zu positionierenden Vorstrecker hat dann zur Folge, daß unbrauchbare Formteile hergestellt werden, die folglich zum Ausschuß gelangen.

Zum Herstellen von Hohlkörpern aus thermoplastischem Kunststoff durch Tiefziehen ist durch die US 4.702.688 A eine Schließ- und Halteeinrichtung für die beiden Hälften einer Tiefziehform bekanntgeworden, bei der die Formhälften über von einem Elektromotor angetriebenen Gewindespindeln geschlossen bzw. geöffnet werden. Wenn die Formhälften geschlossen sind, kann der Elektromotor abgeschaltet werden, weil die Gewindespindeln von ihnen zugeordneten elektromagnetischen Bremsmitteln festgehalten werden.

Hiermit vergleichbar ist es auf einen wiederum anderen Gebiet der Technik, nämlich dem Herstellen von blasgeformten Hohlkörpern aus thermoptastischem Kunststoff, aus der WO 01/34368 A 2 bekannt, dem elektrischen Antriebsmotor oder dem Antriebsstrang zum Bewegen der Blasformhälften eine Feststellbremse zu zuordnen. Für die geschlossenen Blasformhälften wird damit kein ständiger Energiebedarf für die Zuhaltung benötigt.

Der Erfindung liegt daher die Aufgabe zugrunde, ein Verfahren der eingangs genannten Art zu schaffen, mit dem sich auf einfache Weise ein Tiefziehprozeß auch mit im Werkzeug wirkenden hohen Kräften ohne Nachteil auf die Lagegenauigkeit der Antriebseinrichtung durchführen und die Zeit für die Funktion des Vorstreckens so kurz wie möglich halten läßt.

Diese Aufgabe wird erfindungsgemäß dadurch gelöst, daß der beim Erreichen einer Sollposition der Vorstrecker geschlossenen Betriebsbremse über die Maschinensteuerung eine an die angetriebene Spindel angreifende externe Haltebremse zugeschaltet wird und die sich während des Tiefziehprozesses aus dem Werkzeug in Richtung auf den Servomotor aufbauende Kraft aufnimmt. Es läßt sich damit eine hohe Ausstoßleistung an Artikeln bzw. Formteilen erreichen, weil trotz der zur weitestmöglichen Verkürzung der Vorstreckfunktion eingeleiteten Druckluft die Lage des Servomotors und damit der von diesem bewegte Vorstrekker unbeeinflußt bleibt. Denn die zusätzliche externe Haltebremse innerhalb des Antriebsstranges bringt die erforderlichen Haltekräfte, die beispielsweise von 10 KN bis 100 KN reichen können, auf, so daß sich keine nachteiligen Auswirkungen auf die angetriebenen Massen einstellen.

Eine vorteilhafte Ausführung der Erfindung sieht vor, daß der Kraftaufbau im Werkzeug überwacht wird und die externe Haltebremse abhängig von der sich mit fortschreitendem Tiefziehprozeß im Werkzeug abbauenden Kraft beim Erreichen einer Restkraft, die der Haltekraft der Betriebsbremse und der aus dem stets aktiven Servomotor entspricht, signalbetätigt über die Maschinensteuerung gelöst wird. Mittels der in der Maschine befindlichen Steuerung werden folglich Signale nicht nur zum rechtzeitigen Betätigen, sondern insbesondere auch zum Lösen der Haltebremse verarbeitet. Letzteres trägt dazu bei, einen vorzeitigen Verschleiß, vor allem der Bremsbeläge, zu verhindern, weil sich Überschneidungen der vom Servomotor eingeleiteten Bewegung und der ansonsten möglicherweise noch im Eingriff befindlichen Haltebremse ausschließen lassen. Dies deshalb, weil die Maschinensteuerung nach dem Erreichen der Druckspitze sobald dann reagiert, wenn sich der Druck bis zu einer Restkraft abgebaut hat, die ohne weiteres von der Betriebsbremse aufgenommen werden kann. Das Signal zum Öffnen der Haltebremse kann von einem die Kraft im Unterwerkzeug ermittelnden Drucksensor gewonnen werden, alternativ kann als Signalgeber ebenso der Resolver bzw. Drehgeber des Servomotors dienen.

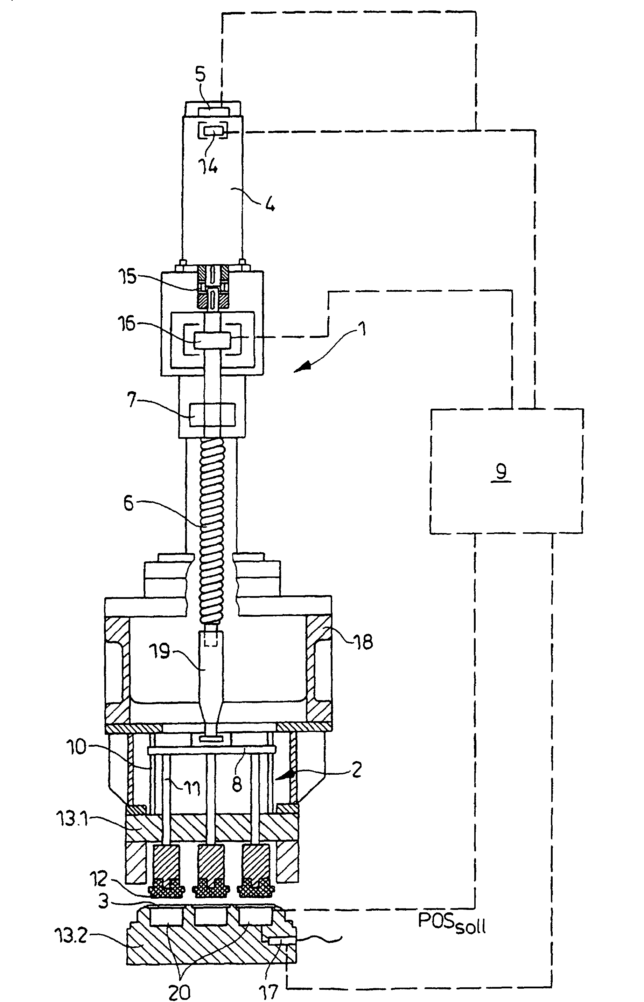

Weitere Einzelheiten und Merkmale der Erfindung ergeben sich aus den Ansprüchen und der nachfolgenden Beschreibung eines in der einzigen Zeichnung dargestellten Ausführungsbeispiels einer Vorstrecker-Antriebseinrichtung des Gegenstandes der Erfindung.

Von einem hinlänglich bekannten Thermoformautomaten ist in der Zeichnung als Einzelheit in einem Teilschnitt lediglich die elektromotorische Vorstrecker-Antriebseinrichtung 1 für die Vorstrecker/Streckhelfer gezeigt. Diese umfaßt hier einen Servomotor 4 mit einem Resolver oder Inkrementalgeber 5 mit integrierter Betriebsbremse 14 und Kupplung 15, über die sich eine Kugelrollspindel 6 mit dazugehöriger Mutter 7 auf und ab bewegen läßt. Die Kugelrollspindel 6 ist über eine Kupplungsstange 19 mit eine Platte 8 verbunden, die eine der Zahl der Formnester 20 entsprechende Anzahl von Stangen 11 mit daran an ihren den Formnestem 20 zugewandten Enden auf die Werkzeugform abgestimmten Vorstreckem 12 trägt. Bei Verstellbewegungen der Vorstreckerplatte 8 gleitet diese auf Führungsstangen 10, die an einer Oberbrücke 18, auf der auch die Antriebseinrichtung 1 angeflanscht ist, angeordnet sind.

Zum Herstellen der Formteile bzw. Behälter 3 in den Formnestern 20 aus einer intermittierend zugeführten, nicht dargestellten, erwärmten thermoplastischen Kunststoffolie wird diese durch den Einsatz der Vorstrecker 12 zunächst mechanisch vorgereckt. Hierzu gibt die Maschinensteuerung 9 ein Signal - dieses und andere Signalleitungen sind in der Zeichnung gestrichelt dargestellt - ab, worauf die Betriebsbremse 14 innerhalb des Servomotors 4 gelöst wird. Der Resolver bzw. Inkrementalgeber 5 gibt einen Impuls zum Erreichen der Sollposition POSₛₒₗₗ vor, während gleichzeitig und parallel hierzu eine der Kugelrollspindel 6 zugeordnete, diese konzentrisch umschließende elektromagnetisch betätigte Haltebremse 16 öffnet. Über die Kupplung 15 wird in der Folge die der Kugelrollspindel 6 über die Mutter 7 auferlegte Drehbewegung auf einen Rahmen 2 übertragen, der die auf den Führungsstangen 10 geführte Platte 8 mit den die Artikelkontur besitzenden Köpfen der Vorstrecker 12 tragenden Stangen 11 aufweist.

Der Rahmen 2 senkt sich folglich innerhalb des aus einem Oberwerkzeug 13.1 und einem Unterwerkzeug 13.2 bestehenden Werkzeugs ab, bis die Vorstrecker 12 die Sollposition POSₛₒₗₗ erreicht haben. Diese Position wird von einem Meßgeber überwacht, der an die Maschinensteuerung 9 angeschlossen ist. Sobald das Sollpositions-Signal an die Maschinensteuerung 9 geht, werden sowohl die Motorbremse 14 als auch die externe Haltebremse 16 aktiviert, so daß die Vorstrecker 12 in dieser Vorreckposition verharren. Zur fertigen Verformung der Kunststoffolie zu den Behältern 3 wird über nicht gezeigte Zuleitungen Druckluft in das Werkzeug eingebracht. Dabei baut sich eine Kraft aus dem Werkzeug 13.2 in Richtung auf die Antriebseinrichtung 1 bzw. den Servomotor 4 und folglich den Rahmen 8 mit den Vorstreckem 12 auf, die jedoch von der zusätzlichen Haltebremse 16 kompensiert wird, was ein Verdrehen der Rollenspindel 6 verhindert und ausschließt, daß sich die Antriebseinrichtung 1 mit den Vorstreckem 12 aufgrund der Krafteinwirkung in ihrer Positionierung verlagert; die Stangen 11 mit den Vorstrekkern 12 behalten vielmehr ihre auf die Werkzeugform bzw. deren Formnester 20 abgestimmte Lage genau ein.

Wenn die Druckluft eine für die Umformung benötigte Druckspitze erreicht hat, baut sie sich wieder ab. Das wird von einem Drucksensor 17 oder dergleichen Signalgeber durch Messung im Unterwerkzeug 13.2 festgestellt, und sobald ein Wert der Restkraft erreicht wird, der der Haltekraft der Betriebsbremse 14 und der aus dem stets aktiven Servomotor entspricht, wird die Haltebremse 16 gelöst. Erst wenn dann der Umformprozeß abgeschlossen ist und der fertige Artikel 3 vorliegt, wird auch die Betriebsbremse 14 gelöst, worauf der Rahmen 2 mit den Vorstrekkem 12 in seine angehobene Ausgangsposition für einen neuen Tiefziehvorgang zurückfährt. Aus dieser Ausgangslage heraus läuft in der Folge jeder weitere Herstellungsprozeß in der zuvor beschriebenen Weise ab, wobei die Maschinensteuerung 9 die eingehenden Signale zum rechtzeitigen Betätigen und Lösen der Betriebsbremse 14 und der externen Haltebremse 16 verarbeitet.

## Patentansprüche

1. Verfahren zum Betreiben einer Vorrichtung zum Ausstanzen bzw. zum kombinierten Formen und Ausstanzen von Formteilen (3), die aus einer im intermittierenden Transport in das Werkzeug (13.1, 13.2) zugeführten, erwärmten thermoplastischen Kunststoffolie mittels Druckluft unter Zuhilfenahme von in die Kunststoffolie pro Formnest (20) eintauchenden Vorstrekkern (12) tiefgezogen werden, wobei eine elektromotorische Vorstrecker-Antriebseinrichtung (1) einen Servomotor (4) umfaßt, der integriert einen Drehgeber oder Resolver (5) sowie eine Betriebsbremse (14) aufweist und über eine angetriebene Spindel (6) ein mit den Vorstreckem (12) ausgerüstetes, geführtes Tragmittel (2) verstellt,
**dadurch gekennzeichnet,**
**daß** der beim Erreichen einer Sollposition (POSₛₒₗₗ) der Vorstrecker (12) geschlossenen Betriebsbremse (14) über die Maschinensteuerung (9) eine an die angetriebene Spindel (6) angreifende externe Haltebremse (16) zugeschaltet wird und die sich während des Tiefziehprozesses aus dem Werkzeug (13.1, 13.2) in Richtung auf den Servomotor (4) aufbauende Kraft aufnimmt.

2. Verfahren nach Anspruch 1,
**dadurch gekennzeichnet,**
**daß** der Kraftaufbau im Werkzeug (13.1, 13.2) überwacht wird und die exteme Haltebremse (16) abhängig von der sich mit fortschreitendem Tiefziehprozeß im Werkzeug abbauenden Kraft beim Erreichen einer Restkraft, die der Haltekraft der Betriebsbremse (14) und der aus dem stets aktiven Servomotor (4) entspricht, signalbetätigt über die Maschinensteuerung (9) gelöst wird.

## Claims

1. A method for operating a device for die-cutting or for moulding and die-cutting mouldings (3) that are swedged by means of compressed air from a heated thermoplastic plastic film that is fed into the tool (13.1, 13.2) intermittently, namely with the assistance of prestretchers (12) that respectively plunge into the plastic film in each mould cavity (20), wherein an electromotive prestretcher drive unit (1) comprises a servomotor (4) that contains an integral rotary encoder or resolver (5), as well as a service brake (14), and adjusts a guided supporting means (2) that is equipped with the prestretchers (12) via a driven spindle (6), **characterized in that** the machine control (9) activates an external holding brake (16) that engages on the driven spindle (6) in addition to the service brake (14) that is engaged once the prestretchers (12) reach a nominal opposition (POSₛₒₗₗ), wherein said holding brake absorbs the force being built up by the tool (13.1, 13.2) in the direction of the servomotor (4) during the swedging process.

2. The method according to Claim 1, **characterized in that** the force being built up in the tool (13.1, 13.2) is monitored and the machine control (9) delivers a signal for disengaging the external holding brake (16) in dependence on the force that diminishes as the swedging process progresses, namely once a residual force is reached that corresponds to the holding load of the service brake (14) and of the constantly active servomotor (4).

## Revendications

1. Procédé d'exploitation d'un dispositif d'estampage ou de moulage et estampage combinés de pièces moulées (3), qui sont embouties dans un film en matière plastique chauffé acheminé par transport intermittent dans l'outillage (13.1, 13.2), au moyen d'air comprimé avec l'assistance de pré-extenseurs (12) plongeant dans le film en matière plastique par cavité de moulage (20), un dispositif d'entraînement de pré-extenseurs à moteur électrique (1) comprenant un servomoteur (4) dans lequel sont intégrés un équipement de résolution ou resolver (5) ainsi qu'un frein de fonctionnement (14) et qui règle, au moyen d'une broche entraînée (6), un moyen de support (2) guidé équipé des pré-extenseurs (12), **caractérisé en ce que**, le frein de fonctionnement (14) étant fermé à l'atteinte d'une position théorique (POS_{théo}) du pré-extenseur, un frein de retenue (16) externe en prise sur la broche entraînée (6) est activé au moyen de la commande de machine (9) et absorbe la force apparaissant, pendant le processus d'emboutissage et issue de l'outillage (13.1, 13.2) en direction du servomoteur (4).

2. Procédé selon la revendication 1, **caractérisé en ce que** l'apparition de force dans l'outillage (13.1, 13.2) est surveillée et que le frein de retenue externe (16), en fonction de la force diminuant dans l'outillage au fur et à mesure que le processus d'emboutissage progresse, à l'atteinte d'une force résiduelle qui équivaut à la force de retenue du frein de fonctionnement (14) et à celle issue du servomoteur (4) toujours actif, est déclenché par actionnement par signal par la commande de machine (9).
